Europäisches Patentamt

European Patent Office

Office européen des brevets

(19)

(11) Publication number: **0 066 530
B2**

# (12) NEW EUROPEAN PATENT SPECIFICATION

(45) Date of publication of the new patent specification:
27.09.89

(51) Int. Cl.⁴: **B 65 G 17/08**

(21) Application number: **82630051.9**

(22) Date of filing: **07.05.82**

(54) Platform conveyor element for low backline pressure platform-chain conveyor.

(30) Priority: **02.06.81 US 269749**
**22.02.82 US 350842**

(43) Date of publication of application:
**08.12.82 Bulletin 82/49**

(45) Publication of the grant of the patent:
**28.08.85 Bulletin 85/35**

(45) Mention of the opposition decision:
**27.09.89 Bulletin 89/39**

(84) Designated Contracting States:
**BE CH DE FR GB IT LI NL SE**

(56) References cited:
**DE-A- 2 210 341**
**FR-A- 2 172 136**
**GB-A- 1 041 649**
**GB-A- 1 371 800**
**IT-A- 42 509**
**SE-A-74 098 831**
**SE-A-81 012 403**
**US-A- 614 306**
**US-A- 2 829 762**
**US-A- 3 543 917**
**US-A- 3 568 822**
**US-A- 3 910 404**
**US-A- 4 053 039**
**US-A- 4 231 469**

(73) Proprietor: **REXNORD INC., P.O. Box 2022, Milwaukee, Wisconsin 53201 (US)**

(72) Inventor: **Hodlewsky, Wasyly G., 8250 Fairmont Lane, Greendale, WI 53219 (US)**

(74) Representative: **Weydert, Robert et al, OFFICE DENNEMEYER S.à.r.l. P.O. Box 1502, L-1015 Luxembourg (LU)**

ACTORUM AG

## Description

This invention relates to a platform conveyor element for a platform-chain conveyor.

When transporting articles by means of a conveyor, there are many instances in which the articles will back up or accumulate on the conveyor. When articles accumulate, they push against each other, building up backline pressure. A large backline pressure is unacceptable when the articles being carried by the conveyor are fragile, because the force of the articles pushing against each other tends to damage them. The backline pressure also puts an extra load on the conveyor and sprockets and causes sliding friction and abrasion of the conveyor.

This problem has been dealt with in the past by mounting rollers in a conveyor frame and driving the rollers by means of a number of small belts such that the rollers slip relative to the shafts when backline pressure begins to build up. This is a relatively complicated system and involves considerable maintenance work in order to keep all the belts operating. Furthermore, this arrangement is not self-cleaning, and therefore the rollers would tend to jam if broken glass or other bits of material fall between the rollers.

The use of rollers for handling backline pressure in conveyor chains is known, for example, from US-A 4 231 469 wherein the conveyor chain comprises a plurality of interconnected cradles each provided with a single roller, and from DE-A 2 210 341 wherein individual rollers are mounted between opposite chain links.

Reference is also made to IT-A 42 509 A/80 which discloses a conveyor chain element according to the precharacterizing portion of claim 1. A plurality of shafts are mounted on the base portion of the chain and carry a plurality of rollers to provide a low backline pressure. A similar conveyor element having a single roller mounted on a base portion is disclosed in US-A 3 910 404. In both IT-A 42 509 A/80 and US-A 3 910 404 the shaft is mounted in holes extending completely through the shaft support portions.

The object of the invention is to provide a novel means for attaching the shaft to the support member avoiding the shaft from slipping out of the receiving means and permitting two chains made up of the conveyor chain elements to run side-by-side.

In accordance with the invention this is achieved by the features of the characterizing portion of claim 1.

With the novel shaft attaching means the support members have a smooth, flush outside surface making it possible for two chains to run side-by-side. The use of blind hole receptacles instead of bores extending completely through the support members creates indented «blind eyes» so that there are no problems with a straight shaft slipping out through an opening in the support member and also speeds and simplifies manufacturing for cost reduction and improved reliability of the assembly.

Some embodiments of the present invention provide polymeric conveyor elements which can be driven by a relatively wide-toothed sprocket, thereby distributing the driving force over a large area. One such embodiment provides a chain which is capable of flexing to the side so as to turn corners, thereby avoiding the limitation of having to run only in a straight line. Several embodiments provide polymeric conveyor elements which have a box-like construction which is designed to withstand higher loads before bending. They also include a novel means of attaching the shaft to the chain link, and, in some cases, provide an intermediate support for the shaft which permits the use of a smaller diameter shaft, thereby conserving material and reducing cost. The use of a smaller diameter shaft also permits a greater ratio of outer diameter to inner diameter on the rollers, making it easier for the rollers to slip over the shaft. The provision of two or more rows of rollers in each conveyor element provides for greater continuity of conveying surface between links and spreads the weight of the article over a large number of rollers so that the shaftroller bearing pressure is low and the resilient wear rate is low.

The plurality of short rollers on each shaft easily follow the bend of the shaft when it deflects due to the weight of articles on it so that the smaller rollers can continue to rotate freely without jamming. The short rollers are also easy to clean, so that, if dirt gets inside the short roller it can be easily washed out.

Another embodiment of the present invention provides a novel type of undriven conveyor, made up of a plurality of conveyor elements fixed at least at one point to a conveyor frame. This undriven conveyor has several advantages over the prior art in that the chain can be easily replaced and the path of the conveyor can easily be changed simply by moving the chain to another position.

It should also be noted that, in several embodiments, the outside diameter of the rollers and the ratio of outside to inside diameter are in a range which is considered to be optimum for providing a relatively continuous conveying surface while still permitting the friction of the articles on the chain to easily turn the rollers.

A more thorough understanding of the present invention will be gained by reading the following description of the preferred embodiments with reference to the accompanying drawings in which:

Figure 1 is a perspective view of a platform conveyor element or link made in accordance with the present invention.

Figure 2 is a schematic of a conveyor using two parallel chains made up of the links shown in Figure 1.

Figure 3 is a side view of a chain made up of the links shown in Figure 1.

Figure 4 is an enlarged broken-away sectional view taken along section 4-4 of Figure 5, showing the intermediate support.

Figure 5 is a top view of the link shown in Figure 1.

Figure 6 is a front view of the link shown in Figure 1.

Figure 7 is a bottom view of the link shown in Figure 1.

Figure 8 is an enlarged broken-away sectional view taken along section 8-8 of Figure 5.

Figure 9 is a broken-away sectional end view of the link shown in Figure 1.

Figure 10 is a top view of a side-flexing link made in accordance with the present invention.

Figure 11 is a front view of the link shown in Figure 10, including support rails.

Figure 12 is a side view of the link shown in Figure 10.

Figure 13 is a bottom view of a chain made from two of the links shown in Figure 10.

Figure 14 is a broken-away bottom view partially in section of the chain of Figure 13.

Figure 15 is a schematic top view of the chain shown in Figure 13 as it turns a corner.

Figure 16 is a schematic perspective view of a conveyor using the chain shown in Figure 13.

Figure 17 is a side view of another embodiment of the present invention in which a polymeric flight including rollers is snapped into a strand of chain.

Figure 18 is a front view of the chain shown in Figure 17.

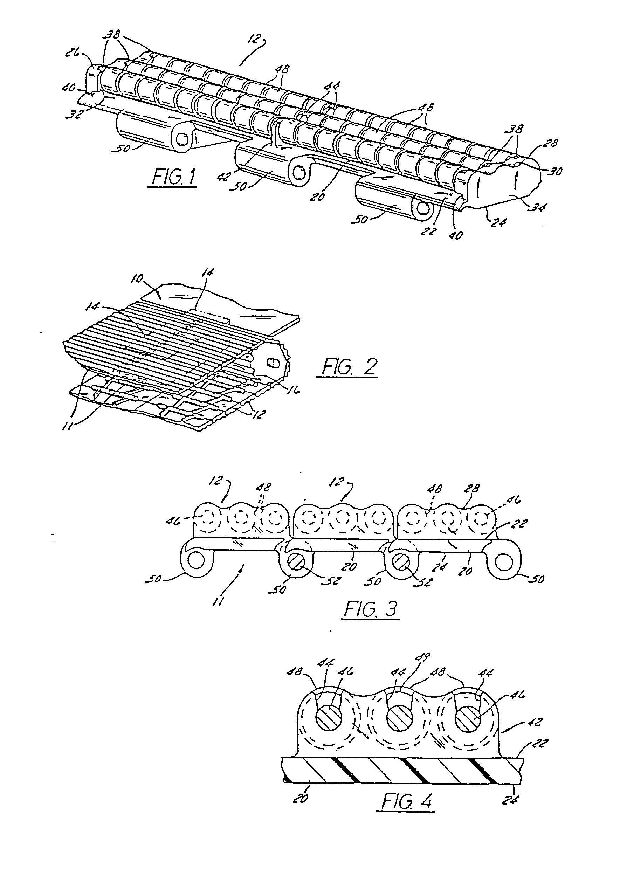

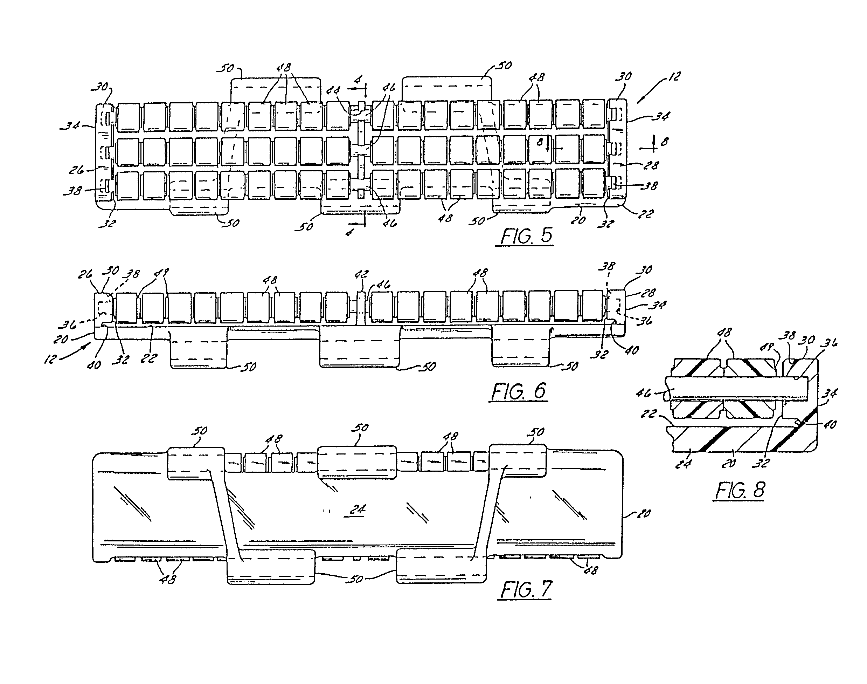

Figures 1 through 9 show various views and parts of a single embodiment of platform conveyor element or link 12. Figure 1 is a perspective view of a link 12, which is made op of a flat base portion 20 having a top surface 22 and a bottom surface 24. First and second shaft support members 26, 28 extend from and are integral with the top surface 22 of the flat base portion 20. Each shaft support member 26, 28, has a top surface 30, an inside surface 32, and an outside surface 34. The inside surface 32 has means for mounting a shaft, including an inwardly opening receptacle in the shape of a cylindrical indentation 36, which is shown in Figures 5, 6 and 8. In the embodiments shown here, each shaft support member 26, 28 has three cylindrical indentations 36 in its inside surface 32. The provision of three receptacles 36 in each shaft support member 26, 28 permits the mounting of three shafts in each link 12, thereby providing a more continuous conveying surface than would exist with only a single shaft in each link.

Each shaft support member 26, 28 also has a ramp (or a resilient detent) 38 leading from its top surface 30 to each cylindrical indentation 36. The outside surface 34 of shaft support members 26, 28 is smooth, flush with the end of flat base portion 20, and has no perforations. This smooth, flush surface makes it possible for two chains made up of links 12 to run side-by-side, providing a wider conveyor, as shown in Figure 2. A small perforation in the receptacle 36, which is smaller in diameter than the end of the shaft 46 would also be acceptable, because it would still form a «blind-eye» for retaining the shaft and would present a smooth outer surface, permitting two chains to run side-by-side.

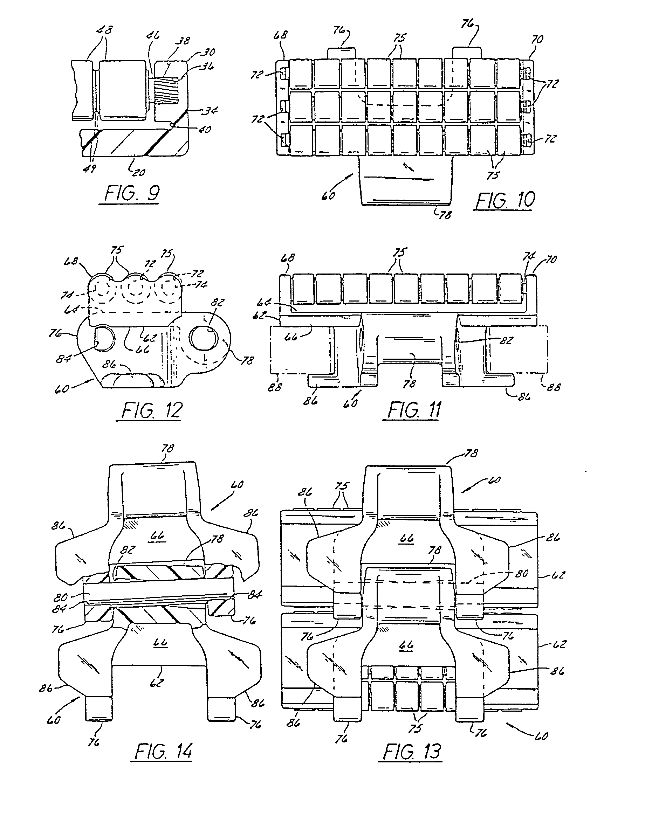

There is an undercut 40 in the inside surface 32 where the shaft support members 26, 28 meet the flat base portion 20. The undercut 40 can be seen most clearly in Figure 8. An intermediate support 42 extends from the top surface 22 of the flat base portion 20 approximately midway between first and second shaft support members 26, 28. There are slot-like indentations 44 in the top surface of the intermediate support 42 adapted to receive and support a shaft. Shafts 46 are mounted in cylindrical indentations 36 in first and second shaft support members 26, 28 such that each shaft 46 has one end mounted in the first shaft support member 26 and the other end mounted in the second shaft support member 28. Each shaft 46 is also inserted into a slot-like indentation 44 for intermediate support. Of course, more than one intermediate support 42 could be used in a link 12. The existence of the intermediate support 42 means that shafts 46 can have a relatively small diameter and still support the same weight as would a larger diameter shaft without an intermediate support. It is preferable that the shafts 46 not rotate relative to the cylindrical indentations 36, so one or both ends of the shafts 46 may be knurled as shown in Figure 9 so as to avoid such rotation.

A plurality of rollers 48 is mounted on each shaft 46. The inner diameter of the rollers 48 is slightly larger than the outer diameter of the shafts 46 so that the rollers 48 may rotate on the shafts 46. Rollers 48 have relatively short length, so that any bending or deflection of the shaft 46 will be less likely to cause freezing of the roller 48 on the shaft 46 than would be the case if the roller 48 were longer, and so that the rollers can easily be cleaned of any dirt which would tend to bind the roller on the shaft. The preferred length of the roller 48 is in the range of from approximately one-half to one times the outside diameter of the roller. If the roller is shorter, it becomes expensive to manufacture such a large number of rollers for each shaft and to assemble the rollers on the shaft, and, if the roller is longer, it becomes more difficult to clean and more likely to freeze on the shaft. It is desirable to make the rollers 48 with a small outer diameter in order to reduce the amount of discontinuity between rollers, so that small articles do not tip over on the chain. However, the ratio of the outer diameter of the roller to its inner diameter must also be large enough so that friction between the article being conveyed and the roller on which it sits will cause the roller to turn. Its thought that the optimum ratio of outer diameter to inner diameter of the roller is approximately in the range of 2.3 to 5. Also, the outside diameter of the roller which provides optimum continuity of conveying surface is approximately in the range of 10 to 15 mm.

The rollers 48 do not fit tightly against each other, but rather have a spacing which permits the rollers 48 to slide axially a short distance along the shaft 46 to aid in cleaning and to reduce the amount of friction exerted on a roller by adjacent rollers. Also, each roller 48 has a smaller diameter hub 49, so that, when the rollers 48 abut each other, they contact each other over a relatively small area and at a smaller distance from the centerline of the shaft. The benefit of the small area of contact and the short distance from the centerline of the shaft over which contact occurs is that there is little friction between a moving roller and a stationary roller, thereby allowing the rollers to move freely. The hub 49 shown here is molded as an integral part of the roller 48, but it is also possible to make the hub a separate member. The large number of short rollers and the low friction between the rollers are especially important if two articles are being carried on the same link 12. In that situation, the articles would be suported by different groups of rollers 48, and the movement of one article would not interfere with the movement of the other article, because of the separation of and low friction between the rollers.

The top surface 30 of the shaft support members 26, 28 has a sinusoidal type of curvature so as to conform to the shape of the rollers 48 so the articles being carried by the link 12 can be moved laterally across the link without catching on the shaft support members 26, 28. Likewise, the top surface of the intermediate support 42, with the exception of the slot-like indentations 44, conformes to the shape of the rollers 48 so that articles being carried by link 12 will not be caught on the intermediate support 42.

Looking now at Figure 7 showing the bottom surface 24 of the flat base portion 20, it can be seen that there is a plurality of barrel or eye portions 50 extending from and integral with the bottom surface 24 of the flat base portion 20. There are three barrel portions 50 on one side and two barrel portions 50 on the other side. In order to form a chain, the two barrel portions on one side of one link 12 fit into the spaces between the three barrel portions 50 on the adjacent link 12, and a pin 52 is inserted through all five barrel portions. Other known barrel arrangements, using different numbers of barrels, may be provided without departing from this invention.

As shown in these figures, the flat base portion 20, barrel portions 50, first and second shaft support members 26, 28 and midpoint support 42 are all formed in a single polymeric piece. Shafts 46, as shown in these figures, are made of metal. Rollers 48 are polymeric. While these materials are preferred, other materials could also be used.

In order to assemble the link 12, rollers 48 are first slipped over the shaft 46. Then the ends of the shaft 46 are placed on corresponding ramps 38 of first and second shaft support members 26, 28. Shafts 46 are pushed down the ramps 38, gradually separating first and second shaft support members 26, 28. The undercut 40 in the inside surface 32 of the shaft support members 26, 28 permits greater flexibility of the shaft support members 26, 28 relative to the flat base portion 20. It has been found from testing that, in many cases, the undercut 40 is not necessary, because most of the flexing, which permits the shaft support members 26, 28 to separate from each other, is flexing of the base portion 20. Shaft 46 slides down the ramp 38 until it reaches cylindrical indentations 36, at which point the first and second shaft support members 26, 28 snap back to their original position. The shaft 46 is thus captured by the shaft support members 26, 28.

Figure 2 shows a conveyor 10 using two chains 11 side-by-side, each chain 11 being made up of links 12. It is possible to use a single chain 11 or a number of such chains 11. Articles 14 are carried by the conveyor 10, and the conveyor 10 is driven by a sprocket 16 having relatively wide teeth. The bottom surface 24 of the flat base portion 20 may ride on support rails (not shown). When articles 14 begin to back up due to an obstruction or for some other reason, rollers 48 on the links 12 rotate relative to the links 12 thereby minimizing the amount of pressure exerted by one of the articles 14 against the other. The chain 11 also exhibits a self-cleaning feature in that debris such as broken glass, which was deposited on the links 12 while they were carrying articles 14, may fall from links 12 as they pass over the sprocket 16 and travel upside down on the return trip.

Figures 10 through 14 illustrate a link for a low backline pressure chain which es very similar to the link 12 but is capable of flexing laterally. Link 60 is made up of a flat base portion 62 which has top and bottom surfaces 64, 66, respectively. First and second shaft support members 68, 70 project from the top surface 64. Each shaft support member 68, 70 includes three shaft mounting means 72, which are the same as the cylindrical indentation and ramp in the previous embodiment. Three shafts 74 are mounted on the link 60, the ends of the shafts 74 being mounted in the shaft mounting means 72 of the first and second support members 68, 70. One end of each shaft is knurled as described earlier. There is a plurality of rollers 75 mounted for rotation about each shaft 74.

A plurality of eye portions 76, 78 extends from the bottom surface 66 of the flat base portion 62, and the eye portions are dimensioned so that the central eye portion 78 of one link will fit between the outside eye portions 76 of the adjacent link, so that a pin can be inserted through the eye portions in order to fasten the links together. Looking at Figure 14, it can be seen that the aperture 82 through the central eye portion 78 is enlarged so that two links 60 can laterally flex relative to each other by means of the pin 80 moving relative to the aperture 82. The aperture 82 may be oval in cross-section or may have a small diameter in the central portion and larger diameter toward the ends. It will also be noted that the apertures 84 in the outside eye portions 76 are roughly D-shaped, and the pin 80 has a corresponding D-shaped cross-section, so that the pin 80 does not turn in apertures 84. Projecting laterally from the lower part of the eye portions 76, 78 are tabs 86 which are adapted to fit under the support rails 88 shown in Figure 11. The chain is held in place on the conveyor because the bottom surface 66 rides on top of the support rails 88 and tabs 86 ride under the support rails to prevent the chain from lifting up when going around corners.

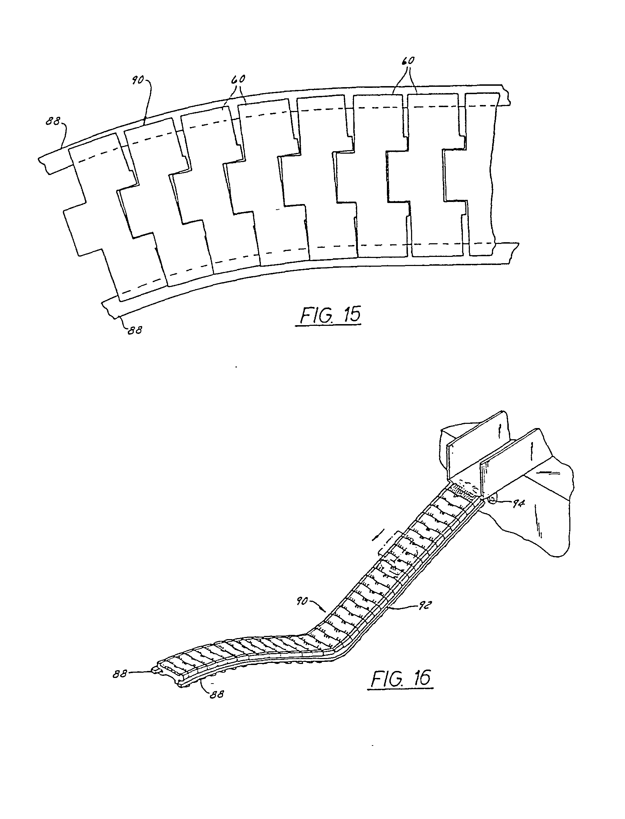

Figure 15 illustrates schematically the manner in which a chain 90, made up of links 60, is able to flex around a corner. An unexpected benefit of this chain 90 is that articles which are accumulating on the chain 90 tend to track the chain 90 even when going around a corner. Apparently, the fact that there is little resistance to movement of articles in the direction in which the rollers 75 rotate and that there is more resistance to lateral movement of articles across the rollers 75 tends to cause the articles to follow the curve of the chain. It may still be necessary to provide guide rails in some cases as a safety to prevent the articles from sliding off the chain when going around corners; however, there may also be instances in which the guide rails can be eliminated due to this tracking feature, and, even where guide rails are used, the contact between the products carried on the chain and the guide rails will be greatly reduced, thereby protecting the articles and any labels which may be on the articles.

Figure 16 illustrates schematically the use of a chain 90 in an undriven conveyor 92. The conveyor is made up of a frame, comprising a pair of support rails 88, and a chain 90 which is fixed to the conveyor frame by means of a pin 94. A side-flexing low backline pressure chain 90 is shown in this instance, because the conveyor 92 conveys articles in a curving path, but, for straight paths, other chains as described herein could be used. A side-flexing chain 90 could be used in various configurations, other than that shown, such as a helical configuration. The use of a low backline pressure chain in an undriven conveyor has several advantages over the use of rollers mounted in the conveyor frame. First, the chain could easily be changed to accommodate different types of articles being carried, simply by removing the pin 94, removing the chain 90, and inserting another chain. Second, the path of the conveyor 90 could easily be moved so that the articles exit the conveyor 92 at a different point, simply by providing support rails (or some other support for the chain) in another direction and by moving the chain 90 onto those supports.

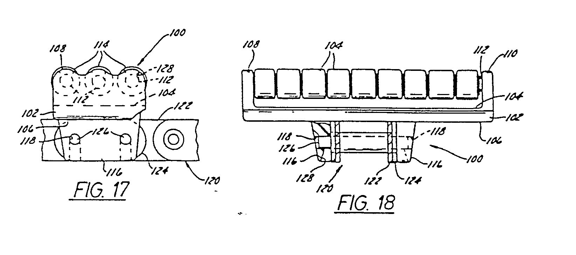

Figures 17 and 18 illustrate another embodiment of the invention, which is a chain 100. Like the previous two embodiments, the chain 100 includes a flat base portion 102 having top and bottom surfaces 104, 106, and having first and second shaft support members 108, 110 extending from the top surface 104 of the flat base portion 102. Each shaft support member 108, 110 includes a shaft mounting means like those shown previously. Shafts 112 extend between the first and second shaft support members 108, 110 and are mounted in the shaft mounting means. A plurality of rollers 114 is mounted for rotation on each shaft 112. Two legs 116 extend downward from the bottom surface 106, each leg having two eyes 118, such that the eyes 118 in one eye portion 116 are aligned with the eyes 118 in the other leg 116. If the chain were side-flexing, the legs 116 would include tabs as described with respect to Figure 11. The legs 116 of the top plate are mounted on a strand of chain 120, which is made up of bushing links 122 and pin links 124, connected together by a plurality of chain pins 126. The strand of chain 120 may be either straight-running or side-flexing chain. The legs 116 are mounted over a pin link 124, and the pins 126 which extend through the pin links 124 extend into the eyes 118 so as to engage the eye portions 116.

Assembly of the chain is as follows:

First, the strand of chain 120 is assembled using pins 126. Then, the top plate is pressed downward onto the strand of chain 120 until the pin 125 contacts the ramp portions 128 on legs 116. Then, as the base portion 102 is pushed progressively downward, the pin 126 acting on the ramps 128 spreads the legs 116 apart until the pin 126 reaches the apertures 118, at which point the legs 116 snap back into position, fixing the base portion 102 on the strand of chain 120. Most of the bending which permits the legs 116 to separate takes place in the base portion 102. Then, the rollers 114 are mounted on the shafts 112, and the shafts 112 are inserted into the shaft support members 108, 110 as described in earlier embodiments. Once the shafts 112 are mounted in place, the assembly becomes more rigid, so that the base portion 102 is less able to flex to permit the legs 116 to separate. This increases the tendency of the base portion 102 to remain firmly mounted on the pin links 124.

## Claims

1. Platform conveyor element for a platform-chain conveyor, comprising a base portion (20; 62; 102) having top and bottom surfaces (22, 24; 64, 66; 104, 106) and at least one shaft (46; 74; 112) resiliently mounted in spaced support members (26, 28; 68, 70; 108, 110) extending from the top surface (22; 64; 104) of the base portion (20; 62; 102), said shaft carrying a plurality of rollers (48; 75; 104) rotatably mounted thereon, each support member (26, 28; 68, 70; 108, 110) being provided with means for receiving therein an end portion of said shaft (46; 74; 112), said shaft causing flexing of at least a portion of at least one of said support members (26, 28; 68, 70; 108, 110) when pressed down into the receiving means such that said at least a portion of said at least one support member is adapted to flex outwardly relative to the top surface of the base portion (20; 62; 102) as said shaft (46; 74; 112) is pressed into said receiving means and then to flex back, characterized in that the receiving means is formed as an inwardly opening blind hole receptacle (36) in the inner surface of each support member (26, 28; 68, 70; 108, 110), said at least one support member comprising an inclined ramp (38; 72; 128) leading from the top surface (30) of the support member to said receptacle (36), said ramp (38; 72; 128) being formed in the inner surface of the support member to cause the support member to flex outwardly axially of the shaft (46; 74; 112) when said shaft is pressed down along said ramp (38; 72; 128) into said receptacle (36).

2. Conveyor element according to claim 1, characterized in that each of said rollers (48; 75; 104) includes a hub having a smaller diameter than the diameter of the roller.

3. Conveyor element according to claim 1 or 2, characterized in that the outer diameter of the rollers (48; 75; 104) is in the range of from 10 to 15 mm.

4. Conveyor element according to any one of claims 1 to 3, characterized in that the ratio of the outer diameter to the inside diameter of the rollers (48; 75; 104) is in the range of from 2.3 to 5.

5. Conveyor element according to any one of claims 1 to 4, characterized in that the ratio of the length of the rollers (48; 75; 104) to the outer diameter is in the range of 0.5 to 1.0.

6. Conveyor element according to claim 1, characterized in that the receptacle (36) is in the shape of a cylindrical indentation.

7. Conveyor element according to claim 1, characterized in that each shaft support member (26, 28; 68, 70; 108, 110) has a plurality of receptacles (36) and wherein there is a corresponding plurality of shafts (46; 74; 112) extending between said shaft support members.

8. Conveyor element according to any one of claims 1 to 7, characterized in that the top surface (30) of said shaft support members (26, 28; 68, 70; 108, 110) conforms to the shape of said rollers (48; 75; 104), so that an article carried by the conveyor element may be moved smoothly across the conveyor element without catching on the support members.

9. Conveyor element according to any one of claims 1 to 8, characterized in that said shaft support members (26, 28; 68, 70; 108, 110) are undercut on their inside surface (32) nearest said base portion (20) to permit greater flexing of said support members relative to said base portion.

10. Conveyor element according to any one of claims 1 to 9, characterized in that an intermediate support (42) extends from the top surface (22) of said base portion (20) between said first and second shaft support members (26, 28), said intermediate support (42) having at least one slotlike indentation (44) in its top surface adapted to receive and support said shaft (46), and that the remainder of the top surface of said intermediate support (42) conformes to the shape of said rollers (48) such that an article carried by the conveyor element (12) may be moved across the conveyor element (12) without catching on the intermediate support (42).

11. Conveyor element according to any one of claims 1 to 10, characterized in that said shaft (46) has a knurled outer surface at one end to prevent the shaft from turning.

12. Conveyor element according to any one of claims 1 to 11, characterized in that a plurality of eye portions (50; 76; 78) extend downward from the bottom surface (24; 66) of said base portion (20, 62) and are adapted to receive a chain pin (52; 80).

13. Conveyor element according to claim 12, characterized in that at least one (78) of said eye portions (76, 78) has an enlarged aperture (82) so as to permit said conveyor element (60) to flex laterally when mounted in a chain.

14. Conveyor element according to claim 12 or 13, characterized in that tabs (86) project laterally from said eye portions (76, 78) so as to fit underneath conveyor guide rails (88) to hold said conveyor element on a conveyor.

15. Conveyor element according to any one of claims 12 to 14, characterized in that two spaced legs (116) project downward from the bottom surface (106) of said base portion (102), each of said legs (116) having two apertures (118) aligned with the corresponding apertures (118) in the other of said legs, said spaced legs (116) being adapted to fit over a strand of chain (120) each of said pairs of corresponding apertures (118) being adapted to receive a chain pin (126) of said strand of chain (120).

**Patentansprüche**

1. Plattenförderer-Element für einen Platten-Ketten-Förderer, mit einem Unterteil (20; 62; 102), der eine obere und eine untere Fläche (22, 24; 64, 66; 104, 106) hat, und mit wenigstens einer Achse (46; 74; 112), die in gegenseitigen Abstand aufweisenden Halteteilen (26, 28; 66, 70; 108, 110) federnd zurückgehalten ist, welche sich von der oberen Fläche (22; 64; 104) des Unterteils (20; 62; 102) aus erstrecken, wobei die Achse mehrere Rollen (48; 75; 104) trägt, die drehbar auf der Achse angeordnet sind, wobei jedes Halteteil (26, 28; 68, 70; 108, 110) mit Mittel versehen ist, um darin einen Endteil der Achse (46; 74; 112) aufzunehmen, wobei die Achse wenigstens eine Biegung eines Teils von wenigstens einem der Halteteile (26, 28; 68, 70; 108; 110) bewirkt, wenn sie nach unten in das Aufnahmemittel gedrückt wird, damit wenigstens der besagte eine Teil von wenigstens dem besagten einen Halteteil sich nach aussen in bezug auf die obere Fläche des Unterteils (20; 62; 102) biegen kann, wenn die Achse (46; 74; 112) in das Aufnahmemittel gedrückt wird, und anschliessend zurückschnappen kann, dadurch gekennzeichnet, dass das Aufnahmemittel als in Form einer Blindbohrung nach innen offene Aufnahme (36) in der inneren Fläche eines jeden Halteteils (26, 28; 68, 70; 108, 110) ausgebildet ist, wobei das besagte wenigstens eine Halteteil eine schräge Rampe (38; 72, 128) aufweist, die von der oberen Fläche (30) des Halteteils zu der Aufnahme (36) führt, wobei die Rampe (38; 72; 128) in der inneren Fläche des Halteteils vorgesehen ist, damit das Halteteil nach aussen in Axialrichtung der Achse (46; 74; 112) biegsam ist, wenn die Achse längs der Rampe (38; 72; 128) nach unten in die Aufnahme (36) gedrückt wird.

2. Förder-Element nach Anspruch 1, dadurch gekennzeichnet, dass jede Rolle (48; 75; 104) eine Nabe aufweist, die einen kleineren Durchmesser als die Rolle hat.

3. Förder-Element nach Anspruch 1 oder 2, dadurch gekennzeichnet, dass der Aussendurchmesser der Rollen (48; 75; 104) in dem Bereich von 10 bis 15 mm liegt.

4. Förder-Element nach einem der Ansprüche 1 bis 3, dadurch gekennzeichnet, dass das Verhältnis des Aussendurchmessers zum Innendurchmesser der Rollen (48; 75; 104) in dem Bereich von 2,3 bis 5 liegt.

5. Förder-Element nach einem der Ansprüche 1 bis 4, dadurch gekennzeichnet, dass das Verhältnis der Länge der Rollen (48; 75; 104) zu dem Aussendurchmesser in dem Bereich von 0,5 bis 1,0 liegt.

6. Förder-Element nach Anspruch 1, dadurch gekennzeichnet, dass die Aufnahme (36) die Form einer zylindrischen Vertiefung hat.

7. Förder-Element nach Anspruch 1, dadurch gekennzeichnet, dass jedes Achsenhalteteil (26, 28; 68, 70; 108, 110) mehrere Aufnahmen (36) hat und dass sich eine entsprechende Anzahl von Achsen (46; 74; 112) zwischen den Achsenhalteteilen erstreckt.

8. Förder-Element nach einem der Ansprüche 1 bis 7, dadurch gekennzeichnet, dass die obere Fläche (30) der Achsenhalteteile (26, 28; 68, 70; 108, 110) der Form der Rollen (48; 75; 104) angepasst ist, so dass ein Gegenstand, den das Förder-Element trägt, stossfrei über das Förder-Element bewegt werden kann, ohne an den Halteteilen hängenzubleiben.

9. Förder-Element nach einem der Ansprüche 1 bis 8, dadurch gekennzeichnet, dass die Achsenhalteteile (26, 28; 68, 70; 108, 110) an ihrer Innenfläche (32) nächst dem Unterteil (20) unterschnitten sind, um ein stärkeres Biegen der Halteteile relativ zu dem Unterteil zu gestatten.

10. Förder-Element nach einem der Ansprüche 1 bis 9, dadurch gekennzeichnet, dass sich ein Zwischenhalter (42) von der oberen Fläche (22) des Unterteils (20) aus zwischen den ersten und zweiten Achsenhalteteilen (26, 28) erstreckt, wobei der Zwischenhalter (42) wenigstens eine schlitzartige Vertiefung (44) in seiner oberen Fläche hat zum Aufnehmen und Halten der Achse (46), und dass der übrige Teil der oberen Fläche des Zwischenhalters (42) der Form der Rollen (48) angepasst ist, so dass ein Gegenstand, den das Förder-Element (12) trägt, über das Förder-Element (12) bewegt werden kann, ohne an dem Zwischenhalter (42) hängenzubleiben.

11. Förder-Element nach einem der Ansprüche 1 bis 10, dadurch gekennzeichnet, dass die Achse (46) eine gerändelte äussere Oberfläche an einem Ende hat, um die Achse am Drehen zu hindern.

12. Förder-Element nach einem der Ansprüche 1 bis 11, dadurch gekennzeichnet, dass mehrere Ösen (50; 76; 78) sich von der unteren Fläche (24; 66) des Unterteils (20, 62) aus erstrecken und zum Aufnehmen eines Kettenstiftes (52; 80) dienen.

13. Förder-Element nach Anspruch 12, dadurch gekennzeichnet, dass wenigstens eine (78) der Ösen (76, 78) eine vergrösserte Öffnung (82) hat, so dass sich das Förder-Element (60) seitlich biegen kann, wenn es in einer Kette befestigt ist.

14. Förder-Element nach Anspruch 12 oder 13, dadurch gekennzeichnet, dass Nasen (86) seitlich von den Ösen (76, 78) vorstehen, so dass sie unter Fördererführungsschienen (88) fassen, um das Förder-Element an einem Förderer zu halten.

15. Förder-Element nach einem der Ansprüche 12 bis 14, dadurch gekennzeichnet, dass zwei gegenseitigen Abstand aufweisende Schenkel (116) von der unteren Fläche (106) des Unterteils (102) aus nach unten vorstehen, wobei jeder Schenkel (116) zwei Öffnungen (118) hat, die auf die entsprechenden Öffnungen (118) in dem anderen Schenkel ausgerichtet sind, wobei die gegenseitigen Abstand aufweisenden Schenkel (116) über ein Kettentrumm (120) passen und wobei jedes Paar entsprechender Öffnungen (118) zur Aufnahme eines Kettenstifts (126) des Kettentrumms (120) dient.

**Revendications**

1. Elément transporteur en plate-form pour chaîne transporteuse en plate-forme, comportant une partie de base (20; 62; 102) ayant des surfaces supérieure et inférieure (22, 24; 64, 66; 104, 106) et au moins un arbre (46; 74; 112) élastiquement retenu dans des éléments de support espacés (26, 28; 68, 70; 108, 110) s'étendant à partir de la surface supérieure (22; 64; 104) de la partie de base (820; 62; 102), cet arbre supportant un ensemble de rouleaux (48; 75; 104) montés à rotation sur l'arbre, chaque élément de support (26, 28; 68, 70; 108, 110) étant muni d'un moyen pour recevoir une partie d'extrémité dudit arbre (46; 74; 112), ledit arbre causant une flexion d'au moins une partie d'au moins un élément de support (26, 28; 68, 70; 108, 110) lorsqu'il est pressé vers le bas pour entrer dans le moyen de réception de telle façon qu'au moins ladite partie dudit élément de support au moins soit destinée à fléchir vers l'extérieur par rapport à la surface supérieure de la partie de base (20; 62; 102) lorsque l'arbre (46; 74; 112) est pressé dans le moyen de réception pour revenir ensuite élastiquement à sa position d'origine, caractérisé en ce que le moyen de réception est formé par un réceptacle (36) ouvert vers l'intérieur en forme d'un trou borgne pratiqué dans la surface interne de chaque élément de support (26, 28; 68, 70; 108, 110), ledit élément de support au moins comportant une rampe inclinée (38; 72; 128) s'étendant à partir de la surface supérieure (30) de l'élément de support vers le réceptacle (36), ladite rampe (38; 72; 128) étant formée dans la surface intérieure de l'élément de support pour causer l'élément de support à fléchir vers l'extérieur en direction axiale de l'arbre (46; 74; 112) lorsque l'arbre est pressé vers le bas le long de la rampe (38; 72; 128) en vue de l'introduire dans le réceptacle (36).

2. Elément transporteur selon la revendication 1, caractérisé en ce que chacun desdits rouleaux (48; 75; 104) comprend un moyeu présentant un diamètre plus petit que le diamètre du rouleau.

3. Elément transporteur selon la revendication 1 ou 2, caractérisé en ce que le diamètre externe des rouleaux (48; 75; 104) est compris dans la plage allant de 10 à 15 mm.

4. Elément transporteur selon l'une quelconque des revendications 1 à 3, caractérisé en ce que le rapport entre le diamètre externe et le diamètre interne des rouleaux (48; 75; 104) est compris dans la plage allant de 2,3 à 5.

5. Elément transporteur selon l'une quelconque des revendications 1 à 4, caractérisé en ce que le rapport entre la longueur des rouleaux (48; 75; 104) et le diamètre externe est situé dans la plage allant de 0,5 à 1,0.

6. Elément transporteur selon la revendication 1, caractérisé en ce que le réceptacle (36) a la forme d'une indentation cylindrique.

7. Elément transporteur selon la revendication 1, caractérisé en ce que chaque élément de support d'arbres (26, 28; 68, 70; 108, 110) comprend un ensemble de réceptacles (36) et en ce qu'il existe un ensemble correspondant d'arbres (46; 74; 102) s'étendant entre lesdits éléments de support d'arbres.

8. Elément transporteur selon l'une quelconque des revendications 1 à 7, caractérisé en ce que la surface supérieure (30) desdits éléments de support d'arbres (26, 28; 68, 70; 108, 110) a une forme s'adaptant à la forme desdits rouleaux (48; 75; 104) de manière qu'un article supporté par l'élément transporteur puisse être déplacé en douceur au travers de l'élément transporteur sans être accroché par les éléments de support.

9. Elément transporteur selon l'une quelconque des revendications 1 à 8, caractérisé en ce que lesdits éléments de support d'arbres (26, 28; 68, 70; 108, 110) présentent une dépouille sur leur surface interne (32) qui est plus proche de ladite partie de base (20) pour permettre une plus grande flexion desdits éléments de support par rapport à ladite partie de base.

10. Elément transporteur selon d'une quelconque des revendications 1 à 9, caractérisé en ce qu'un support intermédiaire (42) s'étend à partir de la surface inférieure (22) de ladite partie de base (20) entre lesdits premier et second éléments de support d'arbres (26, 28), ledit support intermédiaire (42) comprenant au moins une indentation en forme de fente (44) dans sa surface supérieure, apte à recevoir et supporter ledit arbre (46) et en ce que le reste de la surface supérieure dudit support intermédiaire (42) est conforme par sa forme à celle desdits rouleaux (48) de manière qu'un article supporté par l'élément transporteur (12) puisse se déplacer au travers de l'élément transporteur (12) sans être accroché par le support intermédiaire (42).

11. Elément transporteur selon l'une quelconque des revendications 1 à 10, caractérisé en ce que ledit arbre (46) comprend une surface externe moletée à une extrémité pour éviter la rotation de l'arbre.

12. Elément transporteur selon l'une quelconque des revendications 1 à 11, caractérisé en ce qu'un ensemble de parties en forme d'oeillet (50; 76; 78) s'étend vers le bas à partir de la surface inférieure (24; 66) de ladite partie de base (20; 62) et sont aptes à recevoir une tige de chaîne (52; 80).

13. Elément transporteur selon la revendication 12, caractérisé en ce que l'une au moins (78) desdites parties en oeillet (76, 78) comprend une ouverture agrandie (82) de manière à permettre audit élément transporteur (60) de s'infléchir latéralement quand il est monté dans une chaîne.

14. Elément transporteur selon la revendication 12 ou 13, caractérisé en ce que des pattes (86) font saillie latéralement desdites parties en forme d'oeillet (76, 78) de manière à se disposer au-dessous de rails de guidage de transporteur (88) pour maintenir ledit élément transporteur sur un transporteur.

15. Elément transporteur selon l'une quelconque des revendications 12 à 14, caractérisé en ce que deux branches espacées (116) font saillie vers le bas à partir de la surface inférieure (106) de ladite partie de base (102), chacune desdites branches (116) comprenant deux ouvertures (118) en alignement avec les ouvertures correspondantes (118) de l'autre desdites branches, lesdites branches espacées (116) étant aptes à être fixées sur une section de chaîne (120), chacune desdites paires d'ouvertures correspondantes (118) étant apte à recevoir une tige de chaîne (126) de ladite section de chaîne (120).

FIG. 1

FIG. 2

FIG. 3

FIG. 4

FIG. 5

FIG. 6

FIG. 7

FIG. 8

EP 0 066 530 B2

FIG. 9

FIG. 10

FIG. 12

FIG. 11

FIG. 14

FIG. 13

*FIG. 15*

*FIG. 16*

FIG. 17

FIG. 18